(19) Europäisches Patentamt
European Patent Office
Office européen des brevets

(11) Veröffentlichungsnummer: **0 015 479**
**B1**

(12) # EUROPÄISCHE PATENTSCHRIFT

(45) Veröffentlichungstag der Patentschrift: **13.04.83**

(51) Int. Cl.³: **C 08 G 63/20**, C 08 G 18/83, C 09 D 3/64, C 09 D 3/72, C 09 D 5/25, H 01 B 3/42

(21) Anmeldenummer: **80100937.4**

(22) Anmeldetag: **26.02.80**

(54) **Temperaturbeständige vernetzte Polymere, ihre Verwendung, sie enthaltende Lösungen bzw. Mischungen und deren Verwendung.**

(30) Priorität: **06.03.79 DE 2908626**

(43) Veröffentlichungstag der Anmeldung: **17.09.80 Patentblatt 80/19**

(45) Bekanntmachung des Hinweises auf die Patenterteilung: **13.04.83 Patentblatt 83/15**

(84) Benannte Vertragsstaaten: **AT BE DE FR GB IT NL SE**

(56) Entgegenhaltungen:
**DE-A-2 516 978**
**GB-A-1 265 880**
**US-A-3 991 036**
**US-A-4 028 312**

(73) Patentinhaber: **BAYER AG, Zentralbereich Patente, Marken und Lizenzen, D-5090 Leverkusen 1, Bayerwerk (DE)**

(72) Erfinder: **Rottmaier, Ludwig, Bergstrasse 85, D-5068 Odenthal (DE)**
Erfinder: **Merten, Rudolf, Dr., Berta-von-Suttner-Strasse 55, D-5090 Leverkusen 1 (DE)**
Erfinder: **Lewalter, Jürgen, Dr., Bergstrasse 88, D-5068 Odenthal (DE)**
Erfinder: **Zecher, Wilfried, Dr., Treptower Strasse 6, D-5090 Leverkusen (DE)**
Erfinder: **Dünwald, Willi, Dr., Geschwister-Scholl-Strasse 16, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 015 479 B1

# Temperaturbeständige vernetzte Polymere und ihre Verwendung als Bindemittel und daraus erhaltene Überzüge

Für die Herstellung von Überzügen und Filmen auf dem Gebiet der Elektroisoliertechnik müssen die verwendeten Rohstoffe ein gutes elektrisches Isoliervermögen sowie in zunehmendem Maße gute Wärme- und Hitzebeständigkeit haben.

Daher wurden die bekannten Polyester wie Terephthalsäureester (BE-PS 557 685) mittlerweile vielen Modifizierungen unterworfen. Unter anderem werden die mechanischen und thermischen Eigenschaften durch den Einbau von z. B. Imid- und/oder Hydantoin-Gruppen (vgl. GB-PS 1 265 880) variiert. Diese Verfahren sind oft nur mit großem technischen Aufwand durchführbar. Eine einfachere Methode, die Temperaturbeständigkeit (Erweichungstemperatur) zu erhöhen, ergibt sich durch den Einbau von trisfunktionellen Alkoholen wie Trimethylolpropan oder Glycerin. Der Einbau dieser trisfunktionellen Alkohole kann eine Verminderung der Elastizität der Lacke mit sich bringen, so daß ein Kompromiß zwischen hohen Erweichungstemperaturen und hinreichender Elastizität gefunden werden muß.

Eine weitere Verbesserung der thermischen Eigenschaften stellt der Einbau von Isocyanuratstrukturen dar. Dies kann durch den Einbau von Isocyanuratpolyisocyanaten (DE-AS 1 179 319) sowie durch die Mitverwendung von Cyanursäurearylestern und Polyolen (DE-AS 1 096 031) und nachfolgende Umwandlung zu Isocyanursäureester erreicht werden. Diese Verfahren haben jedoch den Nachteil, daß sie zu ziemlich schwer löslichen Polymeren führen, die fast ausschließlich in Lösungsmitteln wie Phenol, Kresole oder Xylenole löslich sind. Diese Lösungsmittel bringen aber in der Regel große Umweltprobleme mit sich.

Aus der DE-OS 2 516 978 war die Verwendung von Verbindungen mit mindestens zwei Oxazolon-(5)-Resten als Vernetzungskomponente bei Hydroxygruppen enthaltenden Polymeren und aus dem US-PS 4 028 312 von Oxazolinverbindungen als Vernetzungs- oder Kettenverlängerungskomponente bei Polymethanen bekannt. Ihr Einsatz bei der Herstellung temperaturbeständiger Überzüge, insbesondere Elektroisolierlacke, wird nicht gelehrt.

Der Erfindung liegt die Aufgabe zugrunde, die oben beschriebenen Nachteile der bekannten Polymeren, die bevorzugt zur Herstellung von Überzügen und Filmen in der Elektroisoliertechnik verwendet werden, zu vermeiden und darüber hinaus solche Polymere zur Verfügung zu stellen, welche bei guten mechanischen Eigenschaften eine erhöhte Wärmebeständigkeit aufweisen und außerdem noch im umweltfreundlicheren Lösungsmittel löslich sind.

Es wurde nun überraschenderweise gefunden, daß durch den Einbau von N,N',N''-Trishydroxyalkyltriazolidin-3,5-dionen in Polymere, die über Ester- und/oder Urethangruppen und ggf. Amid- und/oder Imid- und/oder Isocyanurat- und/oder Hydantoinringe verknüpft sind, bei gleichbleibenden mechanischen Eigenschaften eine Erhöhung des thermischen Werteniveaus erreicht wird. Dies ist umso überraschender, da die Hydrazinstruktur N—N thermisch instabil ist und somit zu erwarten wäre, daß das eingebaute N,N',N''-Trishydroxyalkyl-triazolidin-3,5-dion bei thermischer Belastung abgebaut wird. Ferner wird durch den Einbau von N,N',N''-Trishydroxyalkyl-triazolidindion in die erfindungsgemäßen Polymeren eine Verbesserung der Löslichkeit erzielt, so daß auf die üblicherweise verwendeten und zum Teil sehr toxischen Lösungsmittel wie Phenol, Kresole und Xylenole ganz oder teilweise verzichtet werden kann.

Die Erfindung betrifft daher vernetzte Polymere, die aus Ester- und/oder Urethangruppierungen aufgebaut sind und die ggf. Amid- und/oder Imid- und/oder Isocyanurat- und/oder Hydantoin-Gruppen einkondensiert haben oder mit den entsprechenden Polymeren vermischt sind, die dadurch gekennzeichnet sind, daß sich die Vernetzungskomponente von N,N',N''-Trishydroxyalkyltriazolidin-3,5-dionen der allgemeinen Formel

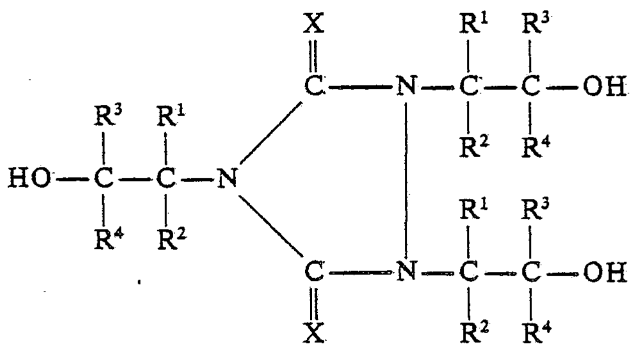

(I)

ableitet,

wobei die Reste $R^1$, $R^2$, $R^3$ und $R^4$ gleich oder verschieden, unabhängig voneinander für Wasserstoff, einen gegebenenfalls mit Halogenatomen substituierten Alkylrest mit $C_1-C_{10}$, Cycloalkylrest mit $C_4-C_8$, Aralkylrest mit $C_7-C_{17}$, oder einen gegebenenfalls mit Halogenatomen, $C_1-C_6$-Alkyl und/oder

$C_1-C_6$-Alkoxy substituierten Arylrest mit $C_6-C_{16}$ und X für O oder S stehen.

Ein weiterer Gegenstand der Erfindung ist die Verwendung dieser Polymeren bzw. Polymermischungen zur Erzeugung wärmebeständiger Beschichtungen, Filme, Überzüge, Folien, Kleber und Formkörper. Die Eigenschaften können je nach Einsatzgebiet durch Zusatz von Füllstoffen, Pigmenten, nieder- und hochmolekularen Komponenten in weiten Grenzen variiert werden.

Die erfindungsgemäß verwendeten Triole der allgemeinen Formel I werden erhalten, indem man Triazolidin-3,5-dion (= Uracol) mit Alkylenoxiden, vorzugsweise Ethylenoxid, Propylenoxid, Butylenoxid, Styroloxid gegebenenfalls in Gegenwart eines geeigneten Katalysators umsetzt. Es können jedoch auch die Thioanalogen des Uracols eingesetzt werden. Die Addition des Alkylenoxids an die drei NH-Gruppen des Triazolidin-3,5-dions kann sowohl bei Anwesenheit von sauren als auch alkalischen Katalysatoren vorgenommen werden. Vorzugsweise verwendet man jedoch bei der Herstellung der Triole der Formel I basische Katalysatoren wie Tetraethylammoniumchlorid, tertiäre Amine wie Triethylamin und Dimethylanilin und Alkali- oder Erdalkalihydroxide oder deren Carbonate wie Calciumhydroxid oder Kaliumcarbonat. Es können jedoch auch Alkalihalogenide wie Lithiumchlorid eingesetzt werden. Die Menge an Katalysator liegt zwischen 0,05 und 3%, bezogen auf die Reaktanten.

Eine bevorzugte Ausführungsform ist die Addition von drei Mol Ethylenoxid an ein Mol Uracol ohne Verwendung eines Katalysators, wobei eine praktisch quantitative Bildung von N,N',N''-Tris-hydroxyethyluracol erfolgt.

Die Herstellung der Trishydroxyverbindungen gemäß Formel I erfolgt vorzugsweise unter Einsatz äquivalenter Mengen, d. h. pro Mol Uracol werden 3 Mole Alkylenoxid eingesetzt. Ein Überschuß oder Unterschuß des Alkylenoxids ist möglich.

Die Reaktion des Uracols mit dem Alkylenoxid wird vorzugsweise in inerten organischen Lösungsmitteln durchgeführt. Insbesondere geeignet sind polare organische Lösungsmittel wie Dimethylsulfoxid, Tetramethylensulfon, Dimethylformamid, Dimethylacetamid und N-Methylpyrrolidion-2. Sehr gut geeignet als Lösungsmittel ist noch Wasser. Dabei ist es nicht unbedingt erforderlich, das Uracol gelöst mit dem Alkylenoxid in Reaktion zu bringen. Die Reaktion kann auch mit einer Uracol-Suspension erfolgen, wobei das gebildete Triol dann in Lösung geht, so daß das Ende der Reaktion durch eine klare Lösung angezeigt wird. Auch kann in die entstehende Triollösung Uracol und Alkylenoxid gemeinsam zugesetzt werden, so daß die Lösungsmittelmenge sehr niedrig gehalten wird. Die Menge an Lösungsmittel sollte aus wirtschaftlichen Gründen sehr niedrig sein und kann zwischen 0,3 Gew.-Teilen und 20 Gew.-Teilen Lösungsmittel, bezogen auf ein Gew.-Teil Reaktanten liegen. Nach beendeter Reaktion wird das Lösungsmittel durch Anlegen von Vakuum entfernt und der verbleibende, viskose Rückstand durch übliche Arbeitsmethoden wie Umkristallisieren gereinigt. Häufig kann jedoch auf eine Reinigung verzichtet werden, und das Rohprodukt wird sofort weiterverarbeitet.

Die Herstellung der Vernetzungskomponente wird vorzugsweise bei Temperaturen von 25°C bis 200°C, besonders bevorzugt bei 80°C bis 150°C, durchgeführt. Die Reaktionszeiten liegen im allgemeinen zwischen 30 Minuten und mehreren Tagen, können in besonderen Fällen jedoch auch darüber oder darunter liegen. Durch entsprechende Wahl der Reaktionsbedingungen, z. B. Druck, werden kürzere Reaktionszeiten erreicht.

In der allgemeinen Formel I bedeuten $R^1$, $R^2$, $R^3$ und $R^4$ vorzugsweise Wasserstoff, $C_1-C_4$-Alkylrest, besonders vorzugsweise Methyl und Ethyl, oder einen ggf. mit Halogenatomen (Chlor, Brom), $C_1-C_4$-Alkylresten und/oder mit $C_1-C_4$-Alkoxygruppen substituierten $C_6-C_{12}$-Arylrest, vorzugsweise Phenyl; besonders bevorzugt bedeuten die Reste Wasserstoff.

Der Einbau der Trishydroxyalkyl-triazolindin-3,5-dione der allgemeinen Formel erfolgt durch Bildung von Ester- und/oder Urethangruppen, so daß die Verbindung der allgemeinen Formel I in einem Polyester und/oder Polyurethan als vernetzende Komponente einkondensiert wird.

Die Veresterungsreaktion zum Aufbau der erfindungsgemäßen Polymeren kann mit allen Polycarbonsäuren, deren partielle oder vollständige Ester und/oder Anhydride, allen Polyolen sowie auch Hydroxycarbonsäuren durchgeführt werden. Insbesondere sind Polycarbonsäuren der allgemeinen Formel

$$A-(COOH)_x$$

geeignet, worin A eine Bindung oder einen x-wertigen, gegebenenfalls substituierten aliphatischen Rest mit vorzugsweise 1–20 C-Atomen, einen cycloaliphatischen Rest mit vorzugsweise 5–15 C-Atome, einen aliphatisch-aromatischen Rest mit vorzugsweise 6–20 C-Atomen, einen aromatischen Rest mit vorzugsweise 6–15 C-Atomen oder einen Heteroatome wie N, O oder S im Ring enthaltenden aromatischen oder cycloaliphatischen Rest mit 5–12 C-Atomen und x eine ganze Zahl von 2 bis 4 vorzugsweise 2 bedeuten.

Derartige Polycarbonsäuren können beispielsweise sein:

Oxalsäure, Malonsäure, Bernsteinsäure, Glutarsäure, Adipin-, Trimethyladipinsäure, Fumarsäure, Maleinsäure, Hexahydroterephthalsäure, Phthalsäure, Isophthalsäure,

Terephthalsäure, Benzol-1,3,5-tricarbonsäure, Benzol-1,2,4-1,2,4-tricarbonsäure, Benzol-1,2,3-tricarbonsäure, Naphthalin-1,5-dicarbonsäure, Benzophenon-4,4'-dicarbonsäure, Diphenylsulfon-4,4'-dicarbonsäure, Butantetracarbonsäure, Tricarballylsäure, Ethylentetracarbonsäure, Pyromellithsäure, Benzol-1,2,3,4-tetracarbonsäure, Benzol-1,2,3,5-tetracarbonsäure, Benzol-1,2,4,5-tetracarbonsäure, sowie

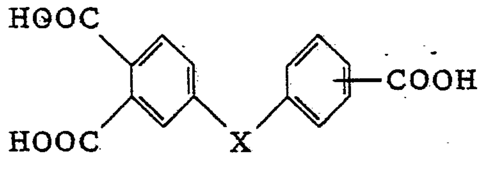

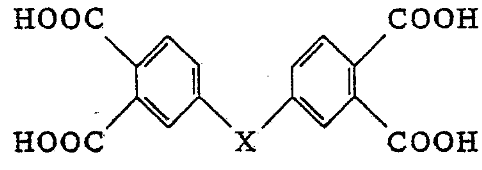

mit X =

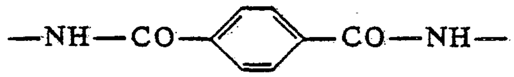

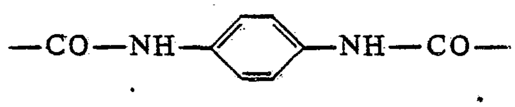

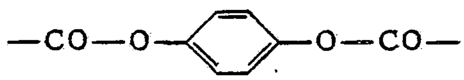

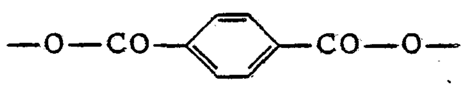

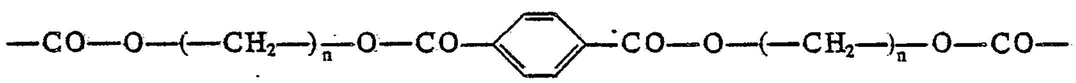

$n = 2-6$

$-CO-O-(-CH_2-)_n-O-CO-$

$-O-$ $-S-$ $-SO_2-$ $-CO-$

$-N{=}N-$ $-CH_2-$ $CH_3-\overset{|}{\underset{|}{C}}-CH_3$

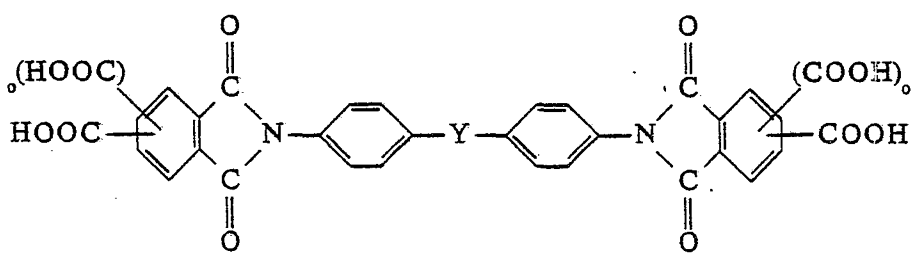

mit $o = 0$ oder 1

$Y = -O-$ $-S-$ $-SO_2-$ $-CO-$

$-N{=}N-$ $-CH_2-$ $CH_3-\overset{|}{\underset{|}{C}}-CH_3$

Beispiele bevorzugter mehrwertiger Alkohole sind aliphatische Diole mit $C_2-C_{20}$ wie Ethylenglykol, Propylenglykol, Dipropylenglykol, Diethylenglykol, Butandiol-1,4, Hexadiol-1,6, Dimethylolpropan, Neopentylglykol, cycloaliphatische Diole mit $C_5-C_{20}$ wie Cyclohexandiol-1,4, 1,4-Bis-hydroxymethylcyclohexan und 2,2-Bis-(4-hydroxycyclohexyl)-propan und araliphatische Diole mit $C_7-C_{20}$ wie 1,4-Bis-hydroxymethyl-benzol und 1,4-Bis-(2-hydroxy-ethoxy)-benzol und/oder aliphatische Triole mit $C_3-C_{20}$ wie Glycerin, Butantriol-1,2,4, Trimethylolpropan, Trimethylolethan, Hexantriol-1,2,6 und/oder Tetraole mit $C_4-C_{20}$ wie Pentaerythrit sowie Heteroatome wie N, O oder S enthaltende Diole bzw. Triole mit $C_2-C_{16}$ wie Bishydroxyalkylhydantoin und Trishydroxyalkylisocyanurat in Substanz oder in Form der dies bildenden Komponenten wie Cyanursäuretriarylester und Polyole.

Als Hydroxycarbonsäuren sind solche der allgemeinen Formel

$$(HOOC)_y\!-\!A\!-\!(OH)_z$$

geeignet, in der A die oben aufgeführten Bedeutungen hat und y sowie z unabhängig voneinander eine ganze Zahl von 1 bis 3, vorzugsweise 1 oder 2 sein können.

Als Beispiele seien Glykolsäure, Milchsäure, Mandelsäure, Apfelsäure, Zitronensäure, Weinsäure, 2- oder 3- oder 4-Hydroxybenzoesäuren sowie Hydroxybenzoldicarbonsäuren aufgeführt.

Selbstverständlich können die einzusetzenden Carbonsäuren bzw. -derivate und die zu verwendenden Polyole auch polymerer Natur sein. So können hier beispielsweise Bisbenzoldicarbonsäureester der Strukturformel

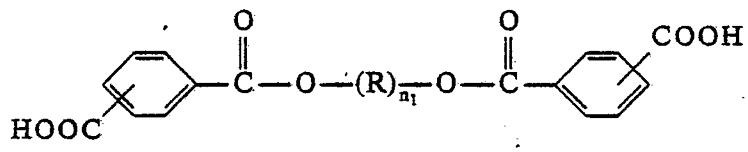

eingesetzt werden.

R bedeutet darin einen mindestens zweiwertigen aromatischen Rest mit $C_6-C_{15}$, einen araliphatischen Rest mit $C_8-C_{20}$, einen gesättigten oder ungesättigten aliphatischen Rest mit $C_2-C_{20}$, einen cycloaliphatischen Rest mit $C_5-C_{15}$, der mit aromatischen ($C_6-C_{12}$), cycloaliphatischen ($C_4-C_{12}$) oder heterocyclischen ($C_3-C_{11}$) Ringsystemen kondensiert sowie über Ether-, Keto-, Ester- oder Sulfonbrücken verbunden und der gegebenenfalls durch Halogene, Nitro- oder Alkoxygruppen mit $C_1-C_{20}$ substituiert sein kann, und $n_1$ für eine ganze Zahl von 1 – 7 steht.

Mögliche Beispiele für $(R)_{n1}$ sind:

$-(CH_2)_2-$ $-(CH_2)_5-$ 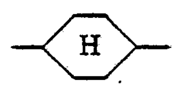

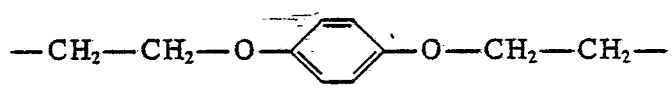

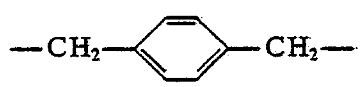 $-(CH_2)_2-O-(CH_2)_2-$

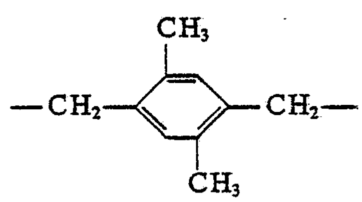 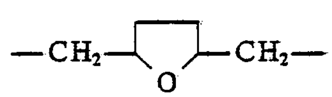

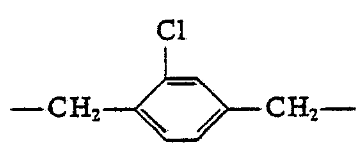 $-CH_2-CH{=}CH-CH_2-$

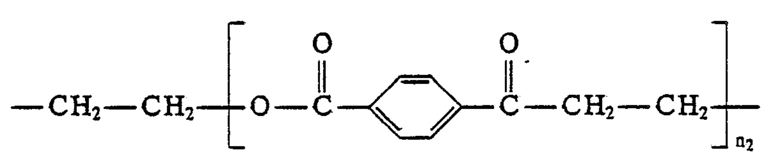

$n_2 = 1-7$

Darüber hinaus können aber auch polymere hydroxylgruppenhaltige Polyester eingesetzt werden, wie sie aus den oben aufgeführten Polycarbonsäuren- bzw. -derivaten und Polyolen erhalten werden. Diese erfindungsgemäß einzusetzenden Carboxylgruppen- bzw. -derivate und Hydroxylgruppen enthaltenden Polyester können in einer vorgeschalteten Reaktion hergestellt werden, sie können aber auch hergestellt und dann in Reaktion mit dem erfindungsgemäß einzusetzenden N,N',N''-Trishydroxyalkyl-triazolidindion-3,5 gebracht werden.

Die Mengenverhältnisse der einzusetzenden Polyole und Polycarbonsäuren können praktisch beliebig variiert werden. So können hydroxylgruppenhaltige Polyester hergestellt werden, die dann direkt, evtl. aus einer Lösung, z. B. auf Drähte appliziert werden können. Solche hydroxylgruppenhaltige Polyester können allerdings ebenso wie die carboxylgruppenhaltigen Polyester noch weiter umgesetzt werden. So können diese hydroxylgruppenhaltigen Polyester, ggf. noch in Abmischung mit dem erfindungsgemäß einzusetzenden N,N',N''-Trishydroxyalkyl-triazolidin-3,5-dion mit Polyisocyanaten zu Polyurethanen umgesetzt werden.

Bei dieser Reaktion können die in der Isocyanatchemie üblichen Katalysatoren mitverwendet werden. Als mitzuverwendende Katalysatoren kommen solche der an sich bekannten Art in Frage, z. B. tertiäre Amine, wie Triethylamin, Tributylamin, N-Methyl-morpholin, N-Ethylmorpholin, N-Cocomorpholin, N,N,N',N'-Tetramethylethylendiamin, 1,4-Diaza-bicyclo-(2,2,2)-octan, N-Methyl-N'-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N'-, N'-Tetramethyl-1,3-butandiamin, N,N-Dimethyl-$\beta$-phenylethylamin, 1,2-Dimethylimidazol, 2-Methylimidazol sowie gegenüber Isocyanatgruppen aktive Wasserstoffatome aufweisende tertiäre Amine wie Triethanolamin, Triisopropanolamin, N-Methyl-diethanolamin und N-Ethyl-diethanolamin.

Als Katalysatoren kommen ferner Silamine mit Kohlenstoff-Silicium-Bindungen, wie sie z. B. in der deutschen Patentschrift 1 229 290 beschrieben sind, in Frage, z. B. 2,2,4-Trimethyl-2-silamorpholin, 1,3-Diethylaminomethyltetramethyl-disiloxan.

Als Katalysatoren kommen auch stickstoffhaltige Basen wie Tetraalkylamoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, vorzugsweise Zinn(II)-Salze von Carbonsäuren wie Zinn(II)-acetat, Zinn(II)-octoat, Zinn(II)-ethylhexoat und Zinn(II)-laurat sowie die Dialkylzinnsalze von Carbonsäuren, wie z. B. Dibutylzinn-diacetat, Dibutylzinn-dilaurat, Dibutylzinn-maleat oder Dioctylzinn als Katalysatoren verwendet werden.

Als Polyisocyanate kommen aliphatische, cycloaliphatische, araliphatische, aromatische und heterocyclische Polyisocyanate in Betracht (vgl. Annalen 562, Seiten 75 bis 136), beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und 1,4-diisocyanat sowie beliebige Gemische dieser Isomeren, 1-Isocyanato-3,3,5-trimethyl-5-isocyanato-methyl-cyclohexan (DE-AS 1 202 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4', 4''-triisocyanat, Polyphenyl-polymethylen-polyisocyanate, wie sie durch Anilin-Formaldehyd-Kondensation und anschließende Phosgenierung erhalten und z. B. in den britischen Patentschriften 874 430 und 848 671 beschrieben werden, perchlorierte Arylpolyisocyanate, wie sie z. B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der US-Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z. B. in den deutschen Patentschriften 1 022 789, 1 222 067 und 1 027 394 sowie in den deutschen Offenlegungsschriften 1 929 034 und 2 004 048 beschrieben werden.

Als Isocyanuratpolyisocyanate werden vorzugsweise Verbindungen der allgemeinen Formel

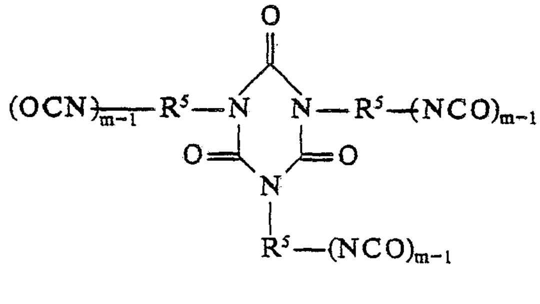

eingesetzt, wobei $R^5$ der noch zu definierende organische Rest der Isocyanatverbindung und m eine ganze Zahl von 1 bis 4 sein sollen. Solche Verbindungen können beispielsweise auch gemäß DE-AS 1 035 362 separat oder in situ aus entsprechenden organische Isocyanaten hergestellt werden.

Ferner Urethangruppen aufweisende Polyisocyanate, wie sie z. B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutschen Patentschrift 1 101 394, in der britischen Patentschrift 889 050 und in der französischen Patentschrift 7 017 514 beschrieben werden, durch Telomerisationsreaktionen hergestellte Polyisocyanate, wie sie z. B. in der belgischen Patentschrift 723 640 beschrieben werden, Estergruppen aufweisende Polyisocyanate, wie sie z. B. in den britischen Patentschriften 956 474 und 1 072 956, in der US-Patentschrift 3 567 763 und in der deutschen Patentschrift 1 231 688 genannt werden, Umsetzungsprodukte der oben genannten Isocyanate mit Acetalen gemäß der deutschen Patentschrift 1 072 358.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Vorzugsweise eignen sich Isocyanate der allgemeinen Formel

$$R^5-(NCO)_m$$

in der $R^5$ für einen, gegebenenfalls mit Halogenatomen, Alkyl- mit $C_1-C_{10}$ und/oder Arylgruppen mit $C_6-C_{12}$ substituierten Alkylrest mit 2–20 C-Atomen, einen Arylrest mit 5–12 C-Atomen, einen Cycloalkylrest mit 5–12 C-Atomen, einen Alkyl-Arylrest mit 6–20 C-Atomen und einen Heteroatome wie N, O oder S im Ring enthaltenden Aryl- oder Cycloalkylrest mit 5–12 C-Atomen steht. m ist eine ganze Zahl von 1–4, vorzugsweise 1–3, besonders bevorzugt 2. Besonders bevorzugt sind aliphatische Reste mit 2–12 C-Atomen oder ein Arylrest wie Phenyl, Tolyl, Naphthyl, Diphenylmethan- und Diphenyletherreste.

Bevorzugt verwendet werden die technisch leicht zugänglichen Gemische aus Toluylen-diisocyanaten, m-Phenylendiisocyanat, sowie phosgenierte Kondensate aus Anilin und Formaldehyd mit Polyphenylen-methylen-struktur und die symmetrischen Verbindungen 4,4'-Diisocyanatodiphenylmethan, 4,4'-Diisocyanatodiphenylether, p-Phenylendiisocyanat und 4,4'-Diisocyanatodiphenyldimethylmethan sowie Isophorondiisocyanat und Hexamethylendiisocyanat.

Die dabei entstehenden Polymeren können direkt als Lacke oder Kunststoffe eingesetzt werden, sie können jedoch aufgrund der geringeren Stabilität der Urethangruppen weiter umgesetzt werden. Insbesondere eignen sie sich zum Einbau von Imid- und/oder Amidgruppen, die durch Reaktion mit allen Polycarbonsäuren sowie cyclischen Carbonsäureanhydriden gebildet werden.

Als Polycarbonsäuren können die bereits beschriebenen Polycarbonsäuren verwendet werden, während die cyclischen Carbonsäureanhydride vorzugsweise die allgemeine Formel

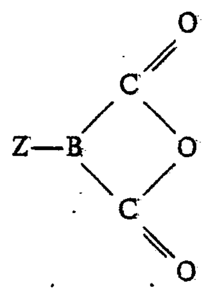

aufweisen, wobei B für einen aliphatischen Rest mit $C_2-C_{20}$, einen cycloaliphatischen Rest mit $C_5-C_{15}$ oder einen aromatischen Rest mit $C_6-C_{20}$ steht und Z eine weitere cyclische Anhydridgruppe, eine Carboxyl- oder Hydroxylgruppe bedeutet. Hierbei kann der Rest B noch zusätzlich, z. B. mit Halogenatomen, substituiert sein.

Diese vorzugsweise mit Carboxylgruppen substituierten, cyclischen Carbonsäureanhydride seien in folgenden Beispielen aufgeführt:

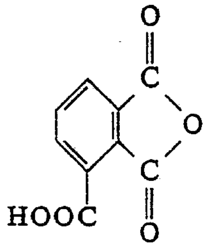

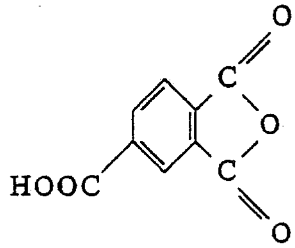

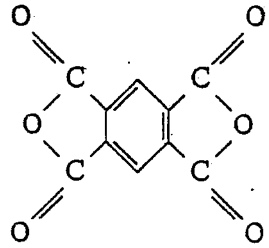

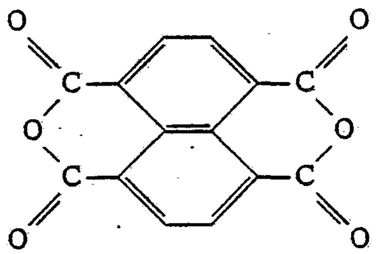

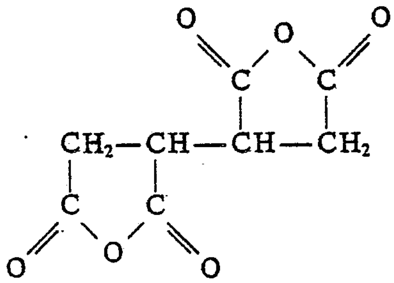

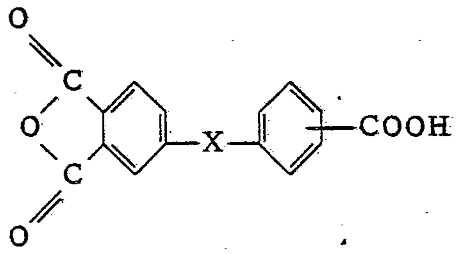

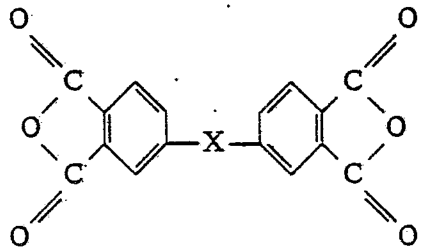

mit X = 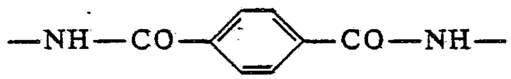

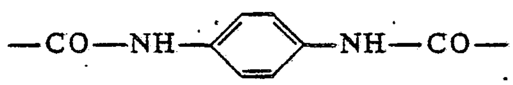

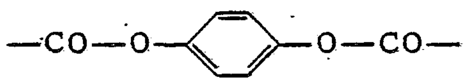

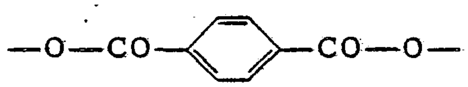

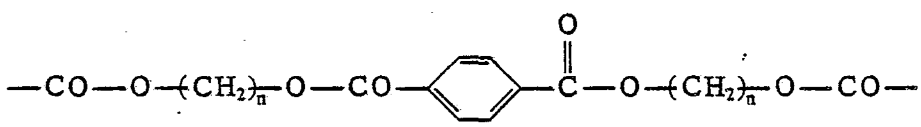

n = 2–6

$—CO—O—(—CH_2—)_n—O—CO—$

$—O—$ $—S—$ $—SO_2—$ $—CO—$

$—N{=}N—$ $—CH_2—$ 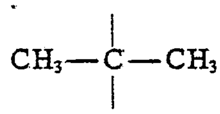

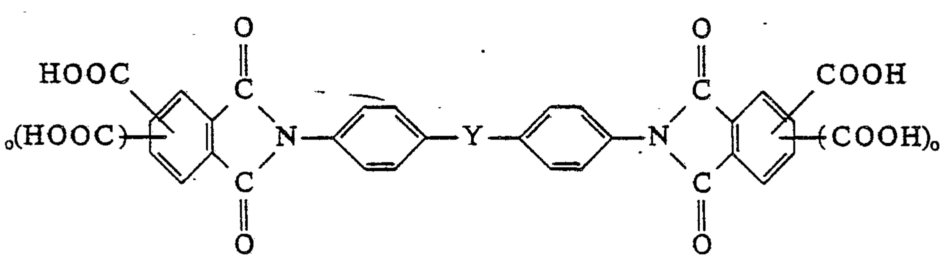

mit $o = 0$ oder 1

$$Y = -O- \quad -S- \quad -SO_2- \quad -CO-$$

$$-N{=}N- \quad -CH_2- \quad CH_3-\overset{|}{\underset{|}{C}}-CH_3$$

Der Einbau der Imid- und/oder Amidgruppen kann aber auch direkt aus den beschriebenen cyclischen Carbonsäureanhydriden und/oder Polycarbonsäuren durch Reaktion mit den freien bereits beschriebenen Polyisocyanaten bzw. den abgeleiteten Polyaminen erfolgen.

Die Isocyanate können in freier Form, ferner zum Teil oder vollständig auch in Form ihrer beim Umsatz mit reaktiven Wasserstoff enthaltenden Verbindungen zugänglichen und unter den Reaktionsbedingungen als Isocyanat-Abspalter reagierenden Derivate eingesetzt werden.

Vorzugsweise werden als Abspalter die Additionsprodukte aus Lactamen, Oximen und CH-aciden Verbindungen sowie die aus aliphatischen und aromatischen Mono- und Polyhydroxy-Verbindungen enthaltenden Carbamidsäureester, beispielsweise der allgemeinen Formel

$$R^5{-}\!\left(NH-\underset{\underset{O}{\|}}{C}-O-M\right)_m \quad \text{bzw.} \quad \left[-\underset{\underset{O}{\|}}{C}-NH-R^5-NH-\underset{\underset{O}{\|}}{C}-O-Q-O-\right]_{y_1}$$

eingesetzt, worin

$R^5$ und m die oben angegebene Bedeutung haben und

M der organische Rest einer Monohydroxyverbindung bzw.

Q der organische Rest einer bis- oder trisfunktionellen Hydroxyverbindung, vorzugsweise M und Q, gleich oder verschieden, ein aliphatischer Rest mit 1–20 C-Atomen, ein aliphatisch-aromatischer Rest mit 7–15 C-Atomen und ein aromatischer Rest mit 6–15 C-Atomen ist, die jeweils noch mit Alkyl- mit $C_1-C_{10}$ und/oder Arylgruppen mit $C_6-C_{12}$ substituiert sein können, und

$y_1$ für eine ganze Zahl von 1 bis 1000, vorzugsweise 1 bis 100 steht.

Als Beispiele seien die Carbamidsäureester aus Phenol, isomeren Kresolen, deren technischen Gemischen und ähnlichen aromatischen Hydroxylverbindungen, aliphatische Monoalkohole wie Methanol, Ethanol, Propanol, Isopropanol, Butanol, Isobutanol, Cyclohexanol, Allylalkohol, Benzylalkohol und aliphatische Di- oder Polyole wie Ethylenglykol und Trimethylolpropan, Glycerin und/oder Trishydroxyalkylisocyanuraten usw., weiterhin die Additionsprodukte mit Pyrrolidon-(2), Caprolactam, Butanon-oxim, Malonester, Acetessigester und Acetophenon aufgeführt.

Die Isocyanat-Abspalter können als solche eingesetzt oder erst in situ durch Umsetzung mit den entsprechenden Reaktanten erzeugt werden.

Anstelle der genannten (Poly)Isocyanate können auch die analogen (Poly)-Isothiocyanate als Ausgangsmaterialien benutzt werden.

Die erfindungsgemäß als Blockierungs- wie auch Lösungsmittel besonders bevorzugten Hydroxylalkyläther sind beispielhaft Verbindungen der allgemeinen Formel

$$R^6{-}\!\left(OR^7\right)_p{-}OH$$

in der

$R^6$ einen gegebenenfalls substituierten aliphatischen Rest mit $C_1-C_{20}$, vorzugsweise $C_1-C_8$, cycloaliphatischen Rest mit $C_3-C_{10}$, vorzugsweise $C_5-C_8$, aliphatisch-aromatischen Rest mit $C_7-C_{15}$ oder aromatischen Rest mit $C_6-C_{14}$, der z. B. mit Alkoxy-, Aroxy- oder Hydroxy-Gruppen substituiert sein kann,

$R^7$ einen aliphatischen Rest mit 2–20 C-Atomen, und

p eine ganze Zahl von 1–100, bevorzugt 1–4, bedeuten.

Vorzugsweise werden erfindungsgemäß solche Hydroxyalkyläther eingesetzt, die pro Molekül eine Hydroxy-Gruppe enthalten und in denen $R^7$ einen Rest mit zwei C-Atomen in der Kette, die beispielsweise durch Alkyl-Gruppen substituiert sein können, bedeutet, z. B. die Methyl-, Isopropyl-, Cyclohexyl-, Benzyl-, Phenyl- und Methoxyethyl-ethylenglykol- und -propylenglykol- bzw. -diethylenglykol und -dipropylenglykol-monoether.

Der Einbau der Imid- und/oder Amidgruppen in die erfindungsgemäßen Polymeren kann in einer der

Polyesterherstellung nachgeschalteten Operation, sie kann aber auch neben der Polyesterherstellung erfolgen. Selbstverständlich kann auch ein Polyamid- und/oder -imid mit endständigen reaktiven Gruppen, z. B. Carboxylgruppen, hergestellt werden, das dann zusammen mit der erfindungsgemäß einzusetzenden N,N',N''-Trishydroxyalkyltriazolidin-3,5-dion, in den Polyester einkondensiert wird.

Die Bildung von Hydantoingruppen zum Aufbau der erfindungsgemäßen Polymeren kann mit den oben aufgeführten, ggf. blockierten Isocyanaten und mit polyfunktionellen, bevorzugt difunktionellen α-Aminocarbonsäurederivate der allgemeinen Formel

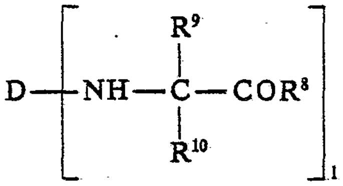

durchgeführt werden, worin D für einen ggf. substituierten aliphatischen Rest mit 2—20 C-Atomen, einen cycloaliphatischen Rest mit 5—15 C-Atomen, einen aliphatisch-aromatischen Rest mit 7—20 C-Atomen, einen aromatischen Rest mit 6—15 C-Atomen und einen Heteroatome wie N, O oder S im Ring enthaltenden aromatischen oder cycloaliphatischen Rest mit 4—15 C-Atomen steht, die alle ggf. mit Halogenatomen, $C_1-C_{10}$ Alkyl- und/oder $C_6-C_{12}$-Arylgruppen substituiert sein können, $R^9$ und $R^{10}$ Wasserstoff, einen gegebenenfalls substituierten aliphatischen Rest mit $C_1-C_{20}$, einen aromatischen Rest mit $C_5-C_{15}$, einen aromatisch-aliphatischen Rest mit $C_6-C_{20}$ oder einen cycloaliphatischen Rest mit $C_5-C_{15}$, $R^8$ eine Hydroxyl-, eine Amino-, eine $C_1-C_{20}$ Alkylamino-, $C_1-C_{20}$ Dialkylamino-, $C_1-C_{20}$ Alkoxy- oder $C_5-C_{15}$ Aroxygruppe und l eine ganze Zahl von 2 bis 4, vorzugsweise 2 bedeuten. Diese polyfunktionellen α-Aminocarbonsäurederivate sind aus der US-Patentschrift 3 397 253 bekannt.

Die aromatischen Reste von D leiten sich insbesondere von Benzol, Azobenzol, Naphthalin, Anthracen, Diphenyl, Triphenylmethan, Diphenylmethan und Diphenylether ab. Diese Reste können auch ein- oder mehrfach substituiert sein, beispielsweise durch $C_1-C_{20}$ Alkyl- (Methyl-), Halogen- (Chlor-), Nitro-, $C_1-C_{20}$ Alkoxy- (Methoxy-), $C_1-C_{20}$ Dialkylamino- (Dimethylamino-), Acyl- (Acetyl-), $C_2-C_{17}$ Carbalkoxy- (Carbometh- oder -ethoxy-) und Cyangruppen. Bevorzugt sind die ggf. ein- oder zweifach durch Methyl und/oder Chlor substituierten Benzol-, Naphthalin-, Diphenylmethan- oder Diphenyletherabkömmlinge.

Die Reste $R^9$ und $R^{10}$ können durch Halogenatome (Chlor-, Brom), Cyan, Hydroxycarbonyl, Aminocarbonyl, Alkoxycarbonyl oder Aroxycarbonyl substituiert sein.

Die Herstellung der erfindungsgemäß als Ausgangsmaterialien zu verwendenden α-Aminocarbonsäurederivate ist im Prinzip bekannt und kann z. B. durch Umsetzung von aromatischen Polyaminen mit Halogenessigsäure oder ihren Derivaten oder auch durch Kondensation mit Blausäure und Aldehyden oder Ketonen unter nachfolgender Umwandlung der Nitrilgruppe in z. B. Carbonsäure, Ester oder Amid erfolgen.

Zum Einbau von Hydantoingruppen eignen sich auch α-Amino-Carbonsäuren der allgemeinen Formel

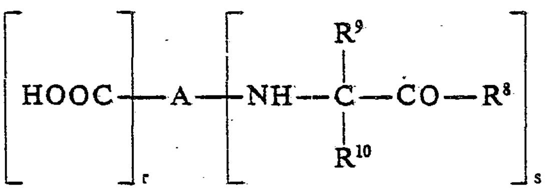

in der A, $R^8$, $R^9$ und $R^{10}$ die bereits oben definierte Bedeutung haben und r und s unabhängig voneinander eine ganze Zahl von 1 bis 3, vorzugsweise 1 bis 2 sein können. Die Herstellung dieser Verbindungen ist im Prinzip bekannt und kann gemäß US-Patent 3 397 253 aus den entsprechenden Aminocarbonsäuren erfolgen. Hierzu können beispielsweise 2-, 3-, und 4-Aminobenzoesäure, 4-Chlor-3-aminobenzoesäure, 2- oder 4- oder 5-Aminoisophthalsäure, 1-Amino-anthrachinon-2-carbonsäure, 4-Aminoanthrachinon-1-carbonsäure, 4-Aminonaphthalin-1,8-dicarbonsäure, 2,4- und 3,4-Diaminobenzoesäure, Aminoessigsäure, Aminopropionsäuren, Aminobuttersäuren oder Aminocapronsäuren verwendet werden.

Zur weiteren Beschleunigung der Hydantoinbildungsreaktionen aber auch der Veresterungsreaktion können die bekannten Katalysatoren, z. B. tert. Amine wie Endoethylenpiperazin, Metallverbindungen wie Titantetrabutylat, Eisenacetylacetonat und Säuren wie p-Toluolsulfonsäure verwendet werden. Der Einbau der Hydantoinringe in die erfindungsgemäßen Polymeren kann in einer nachgeschalteten Operation, sie kann aber auch gleichzeitig in einer Eintopfreaktion neben der Bildung von Ester-, Amid-, Imidgruppen erfolgen. Eine weitere Ausführung zur Herstellung der erfindungsgemäßen Polymeren besteht darin, daß Polyhydantoine, ggf. mit reaktiven Endgruppen wie Isocyanat und/oder Carboxyl in einer vorgeschalteten Reaktion in Schmelze oder in Lösungsmitteln hergestellt werden

und diese Polyhydantoine zusammen mit dem erfindungsgemäß einzusetzenden N,N',N''-Trishydroxyalkyl-triazolidin-3,5-dion in einer nachgeschalteten Operation ggf. zusammen mit Amid-, und/oder Imid- und/oder Isocyanurat in das erfindungsgemäße Polymere einkondensiert wird, wobei das aus der Polyhydantoinherstellung evtl. vorhandene Lösungsmittel beim Auskondensieren wieder ausgetragen werden kann. Selbstverständlich kann bei der Polyhydantoinherstellung als Lösungsmittel ein sogenannter reaktiver Verdünner eingesetzt werden, wenn dieser sich dann in den weiteren Kondensationsstoff einkondensieren läßt, wie dies z. B. bei Alkandicarbonsäure- bzw. Benzoldicarbonsäureestern der Fall ist.

Zur Durchführung des erfindungsgemäßen Verfahrens werden die Reaktionskomponenten mit oder ohne Lösungsmittel und/oder Blockierungsmittel einige Minuten bis zu mehreren Tagen bei Temperaturen von −20 bis 500° C, vorzugsweise 20 bis 400° C, gehalten. Der Reaktionsverlauf kann über eine evtl. stattfindende Gasentwicklung und/oder über IR-Spektrum und/oder über Viskositätsmessungen verfolgt werden. Die erfindungsgemäßen, Trishydroxyalkyl-triazolidin-3,5-dion enthaltenden Polymere besitzen Lösungsviskositäten von 50 bis 500 000 mPas, vorzugsweise von 100 bis 200 000 mPas, die in 15- bis 50%igen Lösungen in Benzylalkohol, Carbitol, $\gamma$-Butyrolacton oder Kresol bei 25° C bestimmt werden.

Im allgemeinen werden zur Herstellung der erfindungsgemäßen Polymeren 1 bis 60%, vorzugsweise 10 bis 40% Trishydroxyalkyl-triazolidin-3,5-dion als vernetzende Komponenten eingesetzt. Von den zur vernetzenden Reaktion führenden einzusetzenden Polyisocyanaten bzw. Polycarbonsäuren werden im allgemeinen ein Überschuß verwendet, doch sind auch sehr weitgehende Abweichungen von diesen Mengenverhältnissen möglich, um das Eigenschaftsprofil der erfindungsgemäßen Polymeren jedem möglichen Anwendungsfall anpassen zu können. Die zum Einbau der Hydantiongruppen in die erfindungsgemäßen Polymere einzusetzenden polyfunktionellen $\alpha$-Amino-carbonsäurederivate können in weiten Grenzen variieren und liegen zwischen 1 und 4 Mol-%, vorzugsweise 5 bis 30%. Allerdings sind nur solche Molverhältnisse zweckmäßig, die zumindest schmelzbare und/oder lösliche Produkte ergeben.

Andererseits können sowohl die Trishydroxyalkyltriazolidin-3,5-dione wie auch die Carbonsäuren und/oder deren Ester und/oder deren Anhydride und/oder Isocyanate in beliebigen Mengen, vorzugsweise im Überschuß eingesetzt und gegebenenfalls gleichzeitig oder anschließend mit gegebenenfalls mehrwertigen Aminen, gegebenenfalls mehrwertigen Alkoholen wie Ethylenglykol, Dipropylenglykol, Trimethylolpropan, Glycerin, Trishydroxyethylisocyanurat und/oder Kombination Cyanursäuretriarylesters und Polyolen gegebenenfalls unter Einsatz weiterer Polyisocyanate bzw. deren Abspalter und/oder unter Einsatz von $\alpha$-Aminocarbonsäurederivate, wie sie in der obigen Patentschrift aufgeführt sind, und/oder gegebenenfalls unter Einsatz weiterer Polycarbonsäure und/oder deren Anhydride und/oder deren gegebenenfalls oligomeren Ester sowie gegebenenfalls unter Zusatz von Hilfs- und Zusatzstoffen, wie $\varepsilon$-Caprolactam, $\varepsilon$-Caprolacton usw., zu verzweigten Triazolidin-3,5-dion-Ringe enthaltenden Polymeren mit beispielsweise Urethan-, Ester-, Imid-, Amid-, Hydantion- und/oder Isocyanuratgruppen von guter Löslichkeit, hervorragender Temperaturbeständigkeit und hoher Elastizität umgesetzt werden.

Selbstverständlich können die erfindungsgemäßen Kondensationsprodukte, gegebenenfalls auch ihre Vorstufen, Polyester, vorzugsweise Hydroxylgruppen enthaltende Polyester, z. B. vorzugsweise aus Maleinsäureanhydrid, Phthalsäureanhydrid und/oder Maleinsäure, Fumarsäure, Bernsteinsäure, Phthalsäure, Isophthalsäure, Terephthalsäure, Trimellithsäure und/oder Trimellithsäureanhydrid und/oder deren Ester, Ethylenglykol, Dipropylenglykol, Glycerin, Trimethylolpropan und/oder Trishydroxyethylisocyanurat und/oder der Kombination aus Cyanursäuretriarylestern und Polyolen, Polyethern, beispielsweise aus Ethylenoxid und/oder Bis-(hydroxyphenyl)-propan und Epichlorhydrin, Polyurethanen, Polyamiden, Polyolefinen, Polyacetalen, Polyepoxiden, Polyimiden, Polyamidimiden, Polyesterimiden, Polyestern, Polyimino-Polyestern, Polyimidisocyanaten, Polyhydantoinen, Polyhydantoinisocyanaten usw. zugemischt oder die Herstellung der erfindungsgemäßen Polymeren in Gegenwart dieser Komponenten durchgeführt werden. In allen Fällen entstehen dabei auch Polymere, die neben dem N,N',N''-Trishydroxyalkyltriazolidin-3,5-dion als vernetzende Komponente zusätzliche Ester-, Urethan-, Amid-, Imid-, Esteramid-, Esterimid-, Amidimid-, (Iso)-Cyanurat- und/oder Hydantoingruppierungen enthalten.

Die Mengenverhältnisse dieser Zusatzstoffe können im Bindemittelgemisch in weiten Grenzen schwanken, vorzugsweise werden bezogen auf das erfindungsgemäße Kondensat 5−500 Gew.-% eingesetzt.

Die Triazolidin-3,5-dion-Gruppen enthaltenden Polykondensate sind vorzugsweise für Einbrennlacke, insbesondere Draht- bzw. Elektroisolierlacke geeignet. Die Bindemittel bzw. Bindemittelgemische kommen dabei im allgemeinen in Lösungsmitteln oder Lösungsmittelgemische zum Einsatz, denen zusätzlich ein gewisser Anteil vorzugsweise Nichtlöser bzw. Verschnittmittel zugesetzt werden kann. Diese Verschnittmittel sind aliphatische und aromatische Kohlenwasserstoffe wie Cyclohexan, Toluol, Xylol sowie deren technische Gemische wie Solvesso und Solventnaphtha.

Als Lösungsmittel kommen phenolische Verbindungen wie Phenole, Kresole und Xylenole sowie vorzugsweise nicht phenolische Lösungsmittel wie Alkohole, Ester, cyclische Ester, Ketone, Ether, substituierte Amide, Nitrile, beispielsweise Benzylalkohol, Phenoxyethanol, Acetophenon, Cyclohexa-

non, Propylencarbonat, -Caprolactam, Ethylenglykolbutylether, Diethylenglykolmethylether, Glykolmonomethyletheracetat, γ-Butyrolacton, Benzoesäurealkylester, N-Methylpyrrolidon, Dimethylformamid, Benzonitril und andere sowie deren Gemische in Frage.

Der Festgehalt der Lacklösungen bzw. Lackmischungen kann in weiten Grenzen schwanken und wird vom Lösungsverhalten der Bindemittel, aber auch vom beabsichtigten Einsatzzweck bestimmt. Vorzugsweise liegt der Feststoffgehalt im Bereich von 20 bis 70 Gew.-%. Die über Triazolidindiongruppen vernetzten Polymeren besitzen eine ausgezeichnete Löslichkeit und können auf den üblichen Lackiermaschinen sowie als Tränklacke bis 60% Feststoffgehalt, gegebenenfalls auch aus der Schmelze oder als Pulver, verarbeitet werden.

Schließlich kann die Härtereaktion des Beschichtungsmittels durch Zusatz der an sich bekannten Katalysatoren wie Basen, beispielsweise Triethylamin, N-Methylmorpholin, Endoethylenpiperazin, wie Säuren, beispielsweise p-Toluolsulfonsäure, wie Metalle, insbesondere von Eisen, Blei, Zink, Zinn, Kupfer, Kobalt, Titan, Mangan, beispielsweise Titantetrabutylat, Eisenacetylacetonat, Dibutylzinnlaurat, Bleiacetat, Zinkoctoat beschleunigt werden, d. h. die Reaktionszeiten werden verkürzt bzw. die Einbrenntemperatur erniedrigt.

Nachfolgende Beispiele sollen das erfindungsgemäße Verfahren näher erläutern.

## Beispiel 1

56,7 g Trimellitsäureanhydrid werden in 300 g γ-Butyrolacton gelöst und nach Zugabe von 298,5 g N,N-Bis-[methoxycarbonylpropyl-(2)-]4,4'-diamino-diphenylmethan bei 30–35° C portionsweise mit 350 g 4,4'-Diisocyanatodiphenylmethan versetzt. Die Lösung wird 2 h bei 35° C nachgerührt und über Nacht stehengelassen. Nach Zugabe von 0,75 g Endoethylenpiperazin werden weitere 175 g 4,4'-Diisocyanato-diphenylmethan, 384 g Trimellitsäureanhydrid, 200 g Terephthalsäuredimethylester und 100 g Toluol zugesetzt und 30 Minuten bei 50° C homogenisiert.

Unter Austragen von Kohlendioxid, Methanol und Toluol wird auf 200° C aufgeheizt und 5 Stunden bei 200° C kondensiert.

Danach wird das Gemisch bei 170° C mit 479 g Terephthalsäuredimethylester, 583 g N,N',N''-Trishydroxyethyltriazolidin-3,5-dion, 3 g Bleiacetat, 1 g Titantetrabutylat und 50 g Xylol versetzt und dann in ca. 6 h bei Temperaturen bis 220° C so weit kondensiert, bis kein Destillat unter 150° C mehr übergeht. Schließlich versetzt man bei 170° C mit 186 g Glykol und 31 g Glycerin und kondensiert nochmals 3 h bei Temperaturen bis 220° C und dann bei 230° C zunächst direkt und schließlich im Vakuum so weit, bis eine mit γ-Butyrolacton auf 50% verdünnte Probe eine Viskosität von ca. 16 000 mPas bei 25° C aufweist. Zum Drahtlackierversuch wurde der Ansatz mit 1850 g γ-Butyrolacton verdünnt und mit 21,5 g Titantetrabutylat versetzt, welches in 43 g Kresol stabilisiert worden war.

Die ca. 50%ige Lacklösung besitzt bei 25° C eine Viskosität von 16 730 mPas und wird zum Lackieren mit einer Mischung aus Benzylalkohol/Solventnaphtha im Verhältnis 3 : 2 auf eine 35%ige Lacklösung weiterverdünnt, mit der in einem Einbrennofen ein Kupferdraht von 0,7 mm Durchmesser lackiert wird.

| | |
|---|---|
| Ofenlänge: | 4 m |
| Ofentemperatur: | 400° C |
| Anzahl der Durchgänge: | 6 |

Bei einer Abzugsgeschwindigkeit von 9 m/Min. wird ein Lackfilm von 25 µm Dicke, d. h. einer Durchmesserzunahme des Drahtes von 50 µm, mit einer Erweichungstemperatur von >325° C, einem Hitzeschock von 260° C, einer Abriebfestigkeit (NEMA) von 60 und einer Außenfaserdehnung von 88% erhalten.

## Beispiel 2

419 g der Lösung von N,N'-Bis-[methoxycarbonylpropyl-(2)-]4,4'-diaminodiphenylmethan in einem Gemisch aus 36% γ-Butyrolacton und 64% Toluol (29,2% N) werden bei Raumtemperatur mit 4,8 g Isophthalsäure und 33,6 g Trimellitsäureanhydrid bei 50° C mit 204 g 4,4'-Diisocyanatodiphenylmethan versetzt und 2 Stunden bei 50° C nachgerührt. Dann werden bei 50° C weitere 87,4 g 4,4'-Diisocyanatodiphenylmethan und 0,6 g Endoethylenpiperazin zugesetzt und 1 Stunde bei 50° C homogenisiert. Zu dieser Lösung werden schließlich bei 50° C portionsweise noch 201,2 g Trimellitsäureanhydrid und 120 g Terephthalsäuredimethylester zugesetzt und anschließend 30 Min. bei 50° C homogenisiert. Die erhaltene Suspension läßt man über Nacht bei Raumtemperatur stehen und heizt anderntags unter Austragen von Kohlendioxid, Methanol und Toluol auf 205° C auf, hält 3 Stunden bei 205° C und schließlich noch 1 Stunde bei 215° C. Danach werden bei 170–180° C 218,8 g Terephthalsäuredimethylester und bei 150–160° C 318 g N,N',N''-Trishydroxyethyl-triazolidin-3,5-dion, 1,8 g Bleiacetat und 0,6 g Titantetrabutylat zugesetzt und innerhalb von 2 Stunden auf 170° C aufgeheizt. Schließlich versetzt man bei 160–170° C noch mit 30 g Xylol und mit 160 g eines Polyesters,

hergestellt aus 4 Mol Terephthalsäure, 1,5 Mol Glycerin und 3 Mol Glykol mit einem OH-Gehalt von 4,53% OH und einer Säurezahl von 4,8 mg KOH und kondensiert nochmals 3 Stunden bei 200–220° C direkt und schließlich im Vakuum so weit, bis eine mit $\gamma$-Butyrolacton auf 50% verdünnte Probe einer Viskosität von ca. 10 000 mPas bei 25° C aufweist. Es werden dabei 1501 g eines spröden, ca. 80%igen Harzes erhalten, dessen 15%ige Lösung in $\gamma$-Butyrolacton eine Viskosität von 156 mPas bei 25° C aufweist.

Zum Drahtlackierversuch werden 500 g dieses Harzes in 300 g Butyrolacton und 300 g Benzylalkohol verdünnt und mit 7,5 g Titantetrabutylat, welches in 15 g Kresol stabilisiert worden war, versetzt und analog Beispiel 1 zum Lackieren eines Kupferdrahtes von 0,7 mm Durchmesser verwendet. Bei einer Abzugsgeschwindigkeit von 10 m/Min. wird ein Lackfilm von 25 µm, d. h. einer Durchmesserzunahme des Drahtes von 50 µm, mit einer Erweichungstemperatur von >330° C, einem Hitzeschock von 260° C, einer Abriebfestigkeit (NEMA) und 45 und einer Außenfaserdehnung von 88% erhalten.

## Beispiel 3

Aus 582 g Terephthalsäuredimethylester, 138 g Glycerin, 62 g Glykol, 233 g Tris-hydroxyethyl-triazolidin-3,5-dion und 50 g Xylol, die nach dem Aufschmelzen mit 1 g Bleiacetat und 0,5 g Titantetrabutylat versetzt wurden, und die nach den üblichen Veresterungsbedingungen bei Temperaturen bis 220° C, zuletzt im Vakuum kondensiert wurden, werden 815 g eines spröden Harzes mit 6,67% Hydroxylgruppen erhalten. Die Viskosität, gemessen als 15%ige Lösung in einem technischen Kresol, das ca. 70% m-Kresol enthält, beträgt bei 25° C 137 mPas. Der Polyester ist in umweltfreundlichen Lösungsmitteln wie Carbitol und Benzylalkohol sowohl 30%ig als auch 50%ig löslich.

Zum Drahtlackierversuch werden 400 g dieses Harzes in 600 g technischem m-Kresol gelöst, mit einem Gemisch aus m-Kresol und Xylol 1 : 1 auf 35% verdünnt und mit 6 g Titantetrabutylat, welches in 12 g Kresol stabilisiert worden war, versetzt und analog Beispiel 1 zum Lackieren eines Kupferdrahtes von 0,7 mm Durchmesser verwendet.

Bei einer Abzugsgeschwindigkeit von 9 m/Min. wird ein Lackfilm von 25 µm Dicke bzw. einer Durchmesserzunahme von 50 µm mit einer Erweichungstemperatur von >320° C, einem Hitzeschock von 155° C, einer Außenfaserdehnung von 67% und einer Abriebfestigkeit (NEMA) von 27 erhalten.

## Beispiel 4

500 g eines Polyesters mit einer Säurezahl von 4,8 und einer Hydroxylzahl von 150 hergestellt aus 4 Mol Terephthalsäure, 1,5 Mol Glycerin und 3 Mol Glykol werden aufgeschmolzen, mit 233 g Trihydroxyethyl-triazolidin-3,5-dion und 1 g Bleiacetat versetzt und nach den üblichen Veresterungsbedingungen bei Temperaturen bis 220° C, zuletzt im Vakuum, zu 660 g eines springharten Polyesterharzes mit einer Säurezahl von 1,2 und einer Hydroxylzahl von 194 auskondensiert. Dieses Harz ist in Carbitol in einer Konzentration von sowohl 30% als auch von 50% löslich, während der Polyester ohne Trishydroxyethyl-triazolidin-3,5-dion in Carbitol nicht löslich ist.

Zum Drahtlackierversuch wird eine 40%ige Lösung in technischem m-Kresol hergestellt, welche mit 1,5% in Kresol stabilisierten Titantetrabutylat versetzt und analog Beispiel 1 zum Lackieren eines Kupferdrahtes von 0,7 mm Durchmesser verwendet wird. Bei einer Abzugsgeschwindigkeit von 9 m/Min. wird ein Lackfilm von 25 µm Dicke, d. h. einer Durchmesserzunahme des Drahtes von 50 µm, mit einer Erweichungstemperatur von >325° C, einer Abriebfestigkeit (NEMA) von 15 und einer Außenfaserdehnung von 88% erhalten.

## Beispiel 5

186 g Glykol, 582 g Terephthalsäuredimethylester, 233 g Tris-hydroxyethyl-triazolidin-3,5-dion und 273 g der Bisimidodicarbonsäure, die durch sechsstündiges Erhitzen von 2 Mol Trimellitsäureanhydrid und 1 Mol 4,4'-Diaminodiphenylmethan in Kresol auf 150° C und nachfolgendem Absaugen erhalten wurde, werden nach dem Aufschmelzen mit 3 g Bleiacetat versetzt und bei Temperaturen bis 220° C, zuletzt im Vakuum zu einem springharten Polyesterimidharz auskondensiert, dessen 15%ige Lösung in technischem m-Kresol eine Viskosität von 110 mPas aufweist. Dieses Polyesterimid ist in Carbitol und Benzylalkohol in allen Konzentrationen über Wochen hinweg löslich.

Zum Drahtlackierversuch wird eine 40%ige Lösung in technischem m-Kresol hergestellt, welche nach Verdünnen mit Kresol/Xylol 1 : 1 auf 35% Festharzgehalt mit 1,5% in Kresol stabilisierten Titantetrabutylat versetzt und analog Beispiel 1 zum Lackieren eines Kupferdrahtes von 0,7 mm Durchmesser verwendet wird. Bei einer Abzugsgeschwindigkeit von 7 m/Min. wird ein Draht mit einer Durchmesserzunahme von 50 µm, d. h. ein Lackfilm von 25 µm mit einer Erweichungstemperatur von >320° C, einem Hitzeschock von 260° C, einer Abriebfestigkeit (NEMA) von 18, einer Außenfaserdehnung von 88% und einer Dauerwärmbeständigkeit von mindestens 2 Wochen bei 180° C erhalten.

## Beispiel 6

In 186 g Ethylenglykol werden bei 120°C 174 g eines Gemisches aus 80% 2,4- und 20% 2,6-Toluylendiisocyanat eingetragen. Dann wird auf 140°C aufgeheizt, 384 g Trimellitsäureanhydrid zugegeben und 10 Stunden bei 190°C bis 210°C gerührt. Anschließend wird auf 170°C abgekühlt, 46 g Glycerin, 117 g 1,2,4-Tris-hydroxyethyl-triazolidin-3,5-dion, 381 g Terephthalsäurebis-glykolester und 1,3 g Pb-acetat eingetragen und die Kondensation in 5 Stunden bei 205°C zu Ende geführt. Das Polyesterimid erstarrt beim Abkühlen zu einem klaren braunen Harz. Die Viskosität einer 15%igen Lösung in Kresol $\eta_{25}$ beträgt 80 mPas. Das IR-Spektrum zeigt bei 1715 und 1775 $cm^1$ die für Imide charakteristischen Banden.

Zur Bereitung einer Lacklösung wird das Harz in einem Lösungsmittelgemisch Kresol/Xylol im Verhältnis 4 : 1 auf einen Feststoffgehalt von 30% gelöst und mit 1,5% Titantetrabutylat versetzt. Auf einer Drahtlackiermaschine wird mit dieser Lösung ein Kupferdraht von 0,7 mm Ø lackiert. Die Ofenlänge beträgt 4 m und die Ofentemperatur 400°C. Unter diesen Bedingungen wird bei einer Lackiergeschwindigkeit von 9 m/Min. ein beschichteter Draht mit einer Erweichungstemperatur von >300°C und einer Elastizität von 88% erhalten.

## Beispiel 7

340 g eines technischen Kresol-Gemisches, 68 g Ethylenglykol und 47 g Tris-hydroxyethyl-triazolidin-3,5-dion werden vorgelegt und bei 120°C mit 174 g Toluylen-(2,4)-diisocyanat versetzt. Danach wurden 384 g Trimellitsäureanhydrid eingetragen, das Reaktionsgemisch rasch auf 180°C und dann im Verlaufe von 8 Stunden auf 210°C aufgeheizt. Die Kondensation zum Esterimid erfolgt unter Abspaltung von Kohlendioxid und Wasser. Das Reaktionsgemisch wird noch 2 Stunden bei 210°C gerührt und mit 450 g Phenol verdünnt. Man erhält eine braune viskose Lösung des Polyesterimids. Die Viskosität einer 15%igen Lösung in Kresol $\eta_{25}$ beträgt 320 mPas.

Eine Probe der Lösung des Reaktionsproduktes wird mit der gleichen Menge, bezogen auf den Festgehalt, eines Polyesters aus Terephthalsäure, Glycerin und Ethylenglykol und mit 1,5% Titantetrabutylat versetzt. Diese Lacklösung wurd auf einer Glasplatte zuerst bei 200° und dann bei 300° zu einem klaren elastischen Lackfilm eingebrannt.

## Beispiel 8

186 g Ethylenglykol und 117 g Tris-hydroxyethyl-triazolidin-3,5-dion werden bei 120°C mit 157 g eines Gemisches aus 80% 2,4- und 20% 2,6-Toluylendiisocyanat versetzt. Anschließend werden bei 140°C 384 g Trimellitsäureanhydrid zugegeben. Dann wird auf 190°C aufgeheizt und die Temperatur im Verlaufe von 10 Stunden auf 210°C gesteigert. Man erhält das Polyesterimid als Schmelze, die beim Abkühlen zu einem braunen Harz erstarrt. Die Viskosität $\eta_{25}$ einer 15%igen Lösung in Kresol beträgt 110 mPas.

Eine Lacklösung aus gleichen Teilen des Harzes, einem Polyester aus Terephthalsäure, Ethylenglykol und Glycerin und 1,5% Titantetrabutylat in Kresol wird auf einem Blech bei zuerst 200°C und dann 300°C zu einem klaren elastischen Lackfilm eingebrannt.

## Beispiel 9

186 g Ethylenglykol, 0,2 g Triethylendiamin, 80 g 4,4'-Bis-(methoxycarbonylpropylamino)-diphenylmethan und 117 g Tris-hydroxyethyl-triazolidin-3,5-dion werden vorgelegt. Dann werden bei 40–50°C 174 g Toluylen-(2,4)-diisocyanat und danach bei 120°C 384 g Trimellitsäureanhydrid eingetragen. Das Reaktionsgemisch wird auf 190°C aufgeheizt und zur Durchführung der Kondensation die Temperatur dann im Verlaufe von 10 Stunden auf 210°C gesteigert. Die Reaktion erfolgt unter Abspaltung von Kohlendioxid, Methanol und Wasser. Das Poly-ester-imid-hydantoin erstarrt beim Abkühlen zu einem klaren spröden Harz. Die Viskosität $\eta_{25}$ einer 15%igen Lösung in Kresol beträgt 90 mPas. Eine Probe wird als Lösung in Kresol mit der gleichen Menge eines Polyesters aus Terephthalsäure, Ethylenglykol und Glycerin und Titantetrabutylat als Katalysator bei 200°C und dann bei 300°C auf einer Glasplatte zu einem klaren elastischen Lackfilm eingebrannt.

## Beispiel 10

100 g Solvesso 100 (techn. Alkylaromaten-Gemisch), 93 g Tris-hydroxyethyl-triazolidin-3,5-dion, 388 g Terephthalsäuredimethylester, 310 g Ethylenglykol, 46 g Glycerin und 1 g Pb-acetat werden innerhalb von 3 Stunden auf 190°C aufgeheizt und bei dieser Temperatur gehalten, bis kein Methanol

mehr überdestilliert. Dann werden 99 g 4,4'-Diaminodiphenylmethan und 192 g Trimellitsäureanhydrid eingetragen und das Reaktionsgemisch 2 Stunden bei 190° C, 2 Stunden bei 200° C und 2 Stunden bei 210° C, zuletzt unter Vakuum, gerührt. Man erhält das Polyesterimid beim Erkalten als klares sprödes Harz. Die Viskosität $\eta_{25}$ einer 15%igen Lösung in Kresol beträgt 140 mPas. Mit einer 20%igen Lösung des Harzes in Kresol wird auf einer Glasplatte bei 200 und danach bei 300° C ein klarer elastischer Lackfilm erhalten.

## Beispiel 11

186 g Ethylenglykol und 177 g Tris-hydroxyethyl-triazolidin-3,5-dion werden vorgelegt und bei 120° C nach Maßgabe der exothermen Reaktion mit 200 g 4,4'-Diisocyanato-diphenylmethan versetzt. Anschließend werden noch 383 g Trimellitsäureanhydrid eingetragen, das Reaktionsgemisch auf 160° C aufgeheizt und die Temperatur dann im Verlauf von 10 Stunden auf 210° C gesteigert. Die Viskosität $\eta_{25}$ einer 15%igen Lösung in Kresol beträgt 190 mPas.

Eine Lösung aus gleichen Teilen des so hergestellten Polyesterimidharzes, einem Polyester aus Terephthalsäure, Glycerin und Ethylenglykol und 1% Titantetrabutylat als Katalysator in Kresol wird auf ein Blech aufgestrichen und bei 200° C und 300° C zu einem harten elastischen Lackfilm eingebrannt.

## Beispiel 12

186 g Ethylenglykol, 80 g 4,4'-Bis-(methoxycarbonylpropylamino)-diphenylmethan, 117 g Tris-hydroxyethyl-triazolidin-3,5-dion und 0,2 g Triethylendiamin werden vorgelegt. Dann werden bei 40–50° C 250 g 4,4'-Diisocyanato-diphenylmethan eingetragen. 1 Stunde bei dieser Temperatur nachgerührt und anschließend nach dem Aufheizen auf 120° C 384 g Trimellithsäureanhydrid zugegeben. Die Temperatur wird dann im Verlaufe von 10 Stunden auf 210° C gesteigert. Das Poly-ester-imid-hydantoin wird als sprödes Harz erhalten. Die Viskosität $\eta_{25}$ einer 15%igen Lösung in Kresol beträgt 120 mPas. Eine Probe wird mit gleichen Anteilen eines Polyesters aus Terephthalsäure, Ethylenglykol und Glycerin und 1% Titantetrabutylat als Katalysator in Kresol gelöst und auf einem Blech bei 200° C und 300° C zu einem klaren elastischen Lackfilm eingebrannt.

## Beispiel 13

372 g Ethylenglykol, 92 g Glycerin und 155 g Trishydroxyethyl-triazolidin-3,5-dion werden vorgelegt. Dann werden bei 120° C 266 g eines Isocyanatgemisches, das bei der Phosgenierung eines Kondensationsproduktes aus Anilin und Formaldehyd erhalten wird, 415 g Terephthalsäure, 422 g Trimellitsäureanhydrid und 1 g Pb-acetat eingetragen. Die Temperatur wird im Verlauf von 12 Stunden, wobei zuletzt Vakuum angelegt wird, auf 220° C gesteigert. Man erhält das Polyesterimid als sprödes braunes Harz. Die Viskosität $\eta_{25}$ einer 15%igen Lösung in Kresol beträgt 120 mPas.

Eine 25%ige Lösung des Harzes in Kresol/Xylol (4 : 1) wird mit 1,5% Titantetrabutylat versetzt und in der beschriebenen Weise bei einer Ofentemperatur von 400° C auf einen Kupferdraht von 0,7 mm Ø aufgebracht. Die Prüfung nach DIN 46 453 eines mit einer Lackiergeschwindigkeit von 11 m/Min. hergestellten Lackdrahtes ergibt eine Elastizität von 88%, einer Erweichungstemperatur von 320° C und einem Abrieb von 21 Hüben.

## Beispiel 14

381 g Terephthalsäuredimethylester, 117 g Tris-hydroxyethyl-triazolidin-3,5-dion und 1,1 g Pb-acetat werden nach Maßgabe der Methanol-Abspaltung auf 170° C aufgeheizt und dann noch 1 Stunde bei dieser Temperatur gerührt. Dann werden noch 248 g Ethylenglykol, 174 g Toluylen-(2,4)-diisocyanat, 46 g Glycerin und 442 g Trimellitsäureanhydrid zugegeben und die Temperatur im Verlauf von 12 Stunden auf 210° C gesteigert. Das Polyesterimid erstarrt beim Abkühlen zu einem klaren spröden Harz. Die Viskosität $\eta_{25}$ einer 15%igen Lösung in Kresol beträgt 100 mPas.

Aus 300 g dieses Harzes, 400 g Phenol/Kresol (1 : 1) 200 g der 25%igen Lösung eines Polyhydantoins in Kresol (Resistherm PH 20), 4,5 g Titantetrabutylat und 100 g Xylol wird eine Lacklösung bereitet. Mit dieser Lösung wird in der beschriebenen Weise bei einer Ofentemperatur von 400° C ein Kupferdraht von 0,7 mm Ø lackiert. Die Prüfung des lackierten Drahtes nach DIN 46 453 ergibt bei einer Lackiergeschwindigkeit von 11 m/Min. eine Elastizität von 88%, eine Erweichungstemperatur von >320° C und einen Hitzeschock von 260° C.

## Patentansprüche

1. Vernetzte Polymere, die über Ester- und/oder Urethangruppierungen verknüpft sind und gegebenenfalls Amid- und/oder Imid- und/oder Isocyanurat- und/oder Hydantoin-Gruppen einkondensiert haben oder mit den entsprechenden Polymeren vermischt sind, dadurch gekennzeichnet, daß sich die Vernetzungskomponente von N, N', N''-Trishydroxyalkyltriazolidin-3,5-dionen der allgemeinen Formel

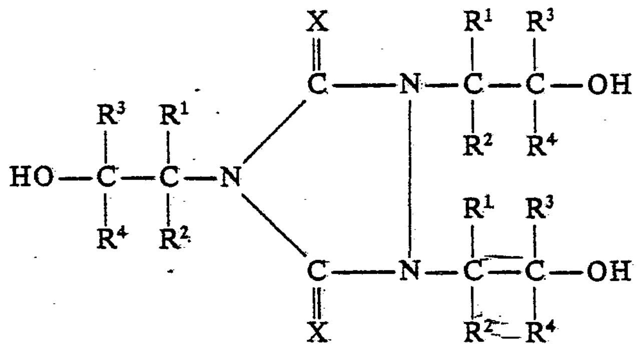

(I)

ableitet,
wobei die Reste $R^1$, $R^2$, $R^3$ und $R^4$ unabhängig voneinander für Wasserstoff, einen gegebenenfalls mit Halogenatomen substituierten Alkylrest mit $C_1-C_{10}$, Cycloalkylrest mit $C_4-C_8$, Aralkylrest mit $C_7-C_{17}$ oder einen gegebenenfalls mit Halogenatomen, $C_1-C_6$-Alkyl- und/oder $C_1-C_6$-Alkoxy substituierten Arylrest mit $C_6-C_{16}$ und X für O oder S stehen.

2. Lösungen bzw. Mischungen, enthaltend als Bindemittel Polymere nach Anspruch 1.

3. Verwendung der Polymeren nach Anspruch 1, insbesondere als Lösungen, Mischungen oder Pulver, zur Herstellung von temperaturbeständigen Überzugsmaterialien, insbesondere Drahtlacke, Folien, Klebern, Formkörpern.

## Claims

1. Crosslinked polymers which are attached through ester and/or urethane groups and which optionally contain amide and/or imide and/or isocyanurate and/or hydantoin groups in co-condensed form or are mixed with the corresponding polymers, characterised in that the crosslinking component is derived from N,N',N''-tris-hydroxyalkyl triazolidine-3,5-diones corresponding to the following general formula

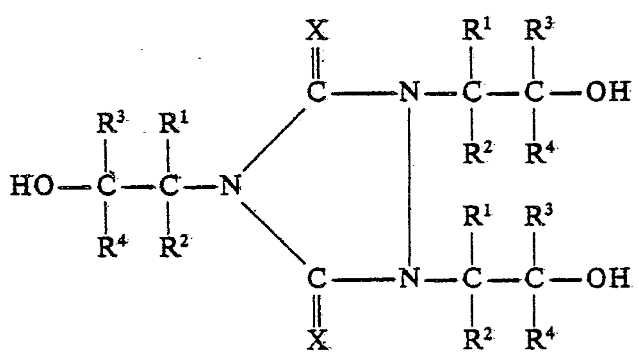

(I)

in which
the radicals $R^1$, $R^2$, $R^3$ and $R^4$ independently of one another represent hydrogen, an optionally halogen-subtituted $C_1-C_{10}$-alkyl radical, $C_4-C_8$-cycloalkyl radical or $C_7-C_{17}$-aralkyl radical or an optionally halogen-, $C_1-C_6$-alkyl- and/or $C_1-C_6$-alkoxy-substituted $C_6-C_{16}$-aryl radical and X represents O or S.

2. Solutions or mixtures containing the polymers claimed in claim 1 as binder.

3. The use of the polymers claimed in claim 1, particularly in the form of solutions, mixtures or powders, for the production of temperature-resistant coating materials, particularly wire lacquers, films, adhesives, mouldings.

**Revendications**

1. Polymères réticulés qui sont liés par l'intermédiaire de groupements ester et/ou d'uréthanne et portent éventuellement, incorporés par condensation, des groupes amide et/ou imide et/ou isocyanurate et/ou hydantoïne ou sont mélangés avec les polymères correspondants, caractérisés en ce que le composant de réticulation est dérivé de N,N',N"-trishydroxyalkyltriazolidine-3,5-diones de formule générale:

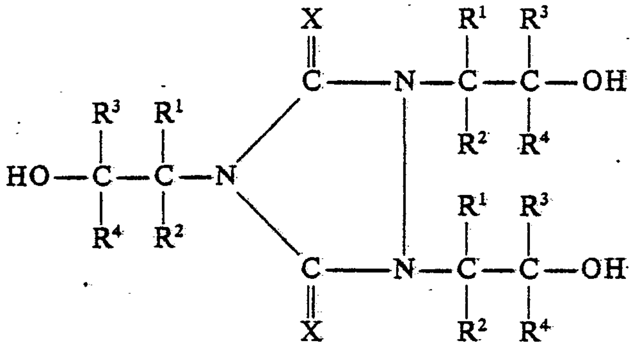

(I)

dans laquelle les restes $R^1$, $R^2$, $R^3$ et $R^4$ représentent, indépendamment les uns des autres, l'hydrogène, un reste alkyle en $C_1$ à $C_{10}$, cycloalkyle en $C_4$ à $C_8$, aralkyle en $C_7$ à $C_{17}$ éventuellement substitué avec des atomes d'halogènes ou un reste aryle en $C_6$ à $C_{16}$ éventuellement substitué avec des atomes d'halogènes, des radicaux alkyle en $C_1$ à $C_6$ et/ou alkoxy en $C_1$ à $C_6$ et X représente O ou S.

2. Des solutions ou mélanges contenant comme liant des polymères suivant la revendication 1.

3. Utilisation des polymères suivant la revendication 1, notamment comme solutions, mélanges ou poudres, pour la production de matières de revêtement résistant à chaud, notamment de vernis pour câbles, de feuilles, d'adhésifs, de pièces moulées.